# EUROPEAN PATENT SPECIFICATION

(11) **EP 3 876 618 B1**
(45) Date of publication and mention of the grant of the patent: **29.07.2026**
(21) Application number: 18938317.7
(22) Date of filing: 31.10.2018
(51) Int. Cl.: H04W 72/04, H04W 16/32, H04W 80/02

(54) **USER EQUIPMENT AND BASE STATION APPARATUS**
BENUTZERGERÄT UND BASISSTATIONSVORRICHTUNG
ÉQUIPEMENT D'UTILISATEUR ET APPAREIL DE STATION DE BASE

(43) Date of publication of application: 08.09.2021
(73) Proprietor: NTT DOCOMO, INC., Chiyoda-ku Tokyo 100-6150 (JP)
(72) Inventor: UCHINO, Tooru, Tokyo 100-6150 (JP); MIN, Tianyang, Tokyo 100-6150 (JP); TAKAHASHI, Hideaki, Tokyo 100-6150 (JP)
(74) Representative: Hoffmann Eitle
(86) International application number: PCT/JP2018/040623
(87) International publication number: WO 2020/090072

(56) References cited:
- WO-A1-2018/143600
- JP-A- 2018 191 288
- SAMSUNG: "(TP for NR BL CR for TS38.473) Discussions on RLC-Failure", vol. RAN WG3, no. Gothenburg, Sweden; 20180820 - 20180824, 10 August 2018 (2018-08-10), XP051528190, Retrieved from the Internet <URL:http://www.3gpp.org/ftp/tsg%5Fran/WG3%5FIu/TSGR3%5F101/Docs/R3%2D184846%2Ezip> [retrieved on 20180810]
- HUAWEI ET AL.: "Activating and deactivating packet duplication", 3GPP TSG RAN WG2 #97BIS R2-1703529, 7 April 2017 (2017-04-07), pages 1 - 4, XP051245374
- HUAWEI ET AL.: "UE behaviors upon duplication activation and deactivation", 3GPP TSG RAN WG2 #101 R2-1801943, 2 March 2018 (2018-03-02), pages 1 - 4, XP051400068
- SAMSUNG: "Email discussion report of [101bis#75] [NR] Max RLC retransmissions indication", 3GPP TSG RAN WG2 #102 R2-1808681, 25 May 2018 (2018-05-25), pages 1 - 12, XP051444921
- ERICSSON: "Multiple duplicate handling", 3GPP TSG RAN WG2 #104 R2-1817180, 16 November 2018 (2018-11-16), pages 1 - 3, XP051481098

## Description

### Technical Field

The present invention relates to a user equipment and a base station apparatus in a radio communication system.

### Background Art

In the 3GPP (3rd Generation Partnership Project), a radio communication scheme called 5G or NR (hereinafter, referred to as "5G" or "NR") has been discussed in order to further increase the capacity of a system, further increase a data transmission speed, and further reduce the delay in a radio section. In 5G, various radio technologies and network architectures have been discussed to meet the requirement that the delay of a radio section be 1 ms or less while achieving a throughput of 10 Gbps or more. For example, a technology for packet duplication that improves reliability using frequency diversity for high reliability communication such as URLLC (Ultra-reliable and low-latency communication) has been discussed (e.g., Non-Patent Document 1).

Similar to dual connectivity in a LTE system, the NR system has introduced a technology called E-UTRA-NR dual connectivity (hereinafter, which may be referred to as "EN-DC") or Multi Radio Access Technology (Multi RAT) dual connectivity (hereinafter, referred to as "MR-DC") where data is divided between a base station (eNB) of the LTE system and a base station (gNB) of the NR system, and is simultaneously transmitted or received by these base stations (for example, Non-Patent Document 2).

WO 2018/143600 A1 discusses that if a transmitting device receives an activation command for a packet duplication function of a PDCP entity for a radio bearer, the PDCP entity submits a PDCP protocol data unit to each of multiple lower layer entities associated with the PDCP entity, and each of the multiple lower layer entities transmits the PDCP PDU.

SAMSUNG: "(TP for NR BL CR for TS38.473) Discussions on RLC-Failure", 3GPP DRAFT; R3-184846_RLCFAILURE_V0.1, 10 August 2018, discusses observation related to RLC failure and proposes releasing SCell(s) with low quality and/or sending LCH ID to a gNB-DU in order to reestablish the corresponding RLC entity.

### Prior Art Documents

### Non-patent Documents

Non-patent Document 1: 3GPP TS 38.300 V15.3.0 (2018-09)
Non-patent Document 2: 3GPP TS 37.340 V15.3.0 (2018-09)

### Summary of the Invention

### Problem to be Solved by the Invention

Packet duplication control for URLLC is implemented by a plurality of RLC (Radio Link Control) connections. However, in a case of establishing a plurality of RLC connections for packet duplication, appropriate communication control is difficult.

The present invention has been made in view of the foregoing and an object of the present invention is to appropriately control a communication condition of communication where packet duplication using a plurality of RLC (Radio Link Control) connections is applied.

### Means for Solving the Problem

The mentioned problems are solved by the subject-matter of the independent claims.

Further preferred embodiments are defined in the dependent claims.

Subject matter discussed throughout the following but not falling under the scope of the claims does not form part of the invention.

### Effect of the Invention

According to the disclosed technology, it is possible to appropriately control a communication condition of communication where packet duplication using a plurality of RLC (Radio Link Control) connections is applied.

### Brief Description of Drawings

FIG. 1 is a diagram illustrating an example of a radio communication system according to an embodiment of the present invention.
FIG. 2 is a diagram illustrating an example of operation of a radio communication system;
FIG. 3 is a diagram illustrating an example of operation of the radio communication system according to an embodiment of the present invention.
FIG. 4 is a sequence diagram illustrating an example (1) of operation of packet duplication according to an embodiment of the present invention.
FIG. 5 is a flowchart illustrating an example (2) of operation of packet duplication according to an embodiment of the present invention.
FIG. 6 is a diagram illustrating an example of an occurrence of an RLC failure during packet duplication.
FIG. 7 is a sequence diagram illustrating an example (3) of operation of packet duplication according to an embodiment of the present invention.
FIG. 8 is a diagram illustrating an example of a functional configuration of a base station apparatus 10 according to an embodiment of the present invention.
FIG. 9 is a diagram illustrating an example of a functional configuration of a user equipment 20 according to an embodiment of the present invention.
FIG. 10 is a diagram illustrating an example of a hardware configuration of a base station apparatus 10 or a user equipment 20 according to an embodiment of the present invention.

### Modes for Carrying Out the Invention

Hereinafter, embodiments of the present invention will be described with reference to the drawings. It is noted that the embodiments described below are examples, and embodiments to which the present invention is applied are not limited to the following embodiments.

In operation of a radio communication system according to an embodiment of the present invention, existing technologies are appropriately used. The existing technologies include, for example, an existing LTE, but are not limited to the existing LTE. The term "LTE" used herein has, unless otherwise noted, a broad meaning and thus may mean LTE-Advanced, schemes (e.g., NR) developed after LTE-Advanced, and a radio LAN (local area network).

According to the embodiment of the present invention, the duplex scheme may be a TDD (Time Division Duplex) scheme, may be an FDD (Frequency Division Duplex) scheme, and may be any other scheme (e.g., Flexible Duplex, etc.).

According to an embodiment of the present invention, a radio parameter or the like being "configured" may mean that a predetermined value is preconfigured and may mean that a radio parameter indicated by a base station apparatus 10 or a user equipment 20 is configured.

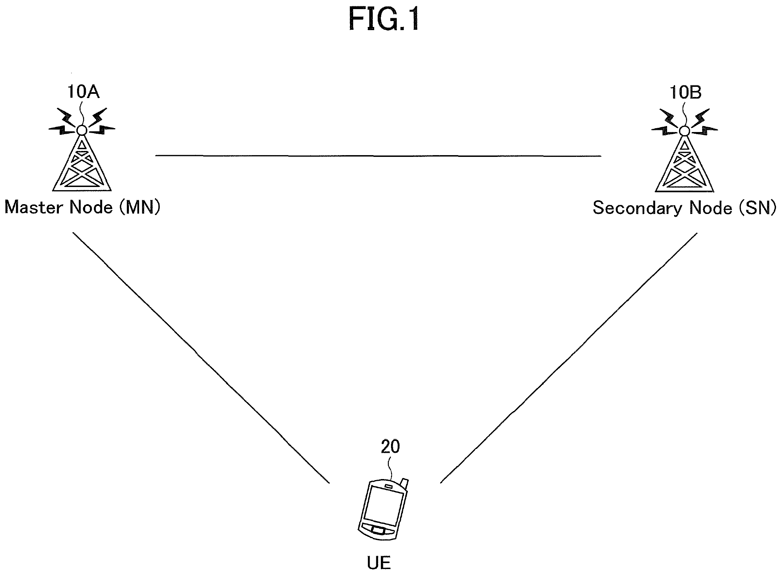

FIG. 1 is a diagram illustrating an example of a radio communication system according to an embodiment of the present invention. FIG. 1 is a schematic diagram illustrating a radio communication system in a case of EN-DC.

As shown in FIG. 1, a UE 20, which is a user equipment, communicates with a base station apparatus 10A provided by a LTE system, a base station apparatus 10B provided by a NR system (hereinafter, the base station apparatus 10A and the base station apparatus 10B may be referred to as "base station apparatuses 10" if the base station apparatus 10A and the base station apparatus 10B are not distinguished). The user equipment 20 supports LTE-NR dual connectivity, i.e., EN-DC, where the base station apparatus 10A acts as a master node (hereinafter that may be also referred to as a "MN") and the base station apparatus 10B acts as a secondary node (hereinafter that may be also referred to as a "SN"). The user equipment 20 can simultaneously use a plurality of component carriers provided by the base station apparatus 10A, which is a MN, and the base station apparatus 10B, which is a SN, to perform simultaneous transmission or simultaneous reception with the base station apparatus 10A, which is a MN, and the base station apparatus 10B, which is a SN. For example, the base station apparatus 10A, which is a MN, may be referred to as a base station apparatus of LTE (eNB: enhanced NodeB), and the base station apparatus 10B, which is a SN, may be referred to as a NR base station apparatus (gNB: next generation NodeB). In the illustrated example, the LTE system or the NR system has only one base station. However, in general, many base station apparatuses 10 are installed that cover service areas of an LTE system and an NR system.

The base station apparatus 10A, which is a MN, may form an MCG (Master cell group) using a plurality of cells according to the CA (Carrier aggregation) technology. Similarly, the base station apparatus 10B, which is a SN, may form an SCG (Second Cell Group) using a plurality of cells according to the CA technology. A cell has a Component Carrier (CC). The user equipment 20 can communicate with an MCG and an SCG using dual connectivity.

Although the following examples are described for LTE-NR dual connectivity, dual connectivity of a radio communication system according to an embodiment of the present invention is not limited to LTE-NR dual connectivity, and may be a dual connection between a plurality of radio communication systems utilizing different RATs, i.e., MR-DC (Multi-RAT Dual Connectivity). Also, dual connectivity of a radio communication system according to an embodiment of the present invention may be NE-DC (NR-E-UTRA Dual Connectivity), may be dual connectivity where, both of a base station apparatus 10A and a base station apparatus 10B are of an LTE system, and may be dual connectivity where both of a base station apparatus 10A and a base station apparatus 10B are of an NR system.

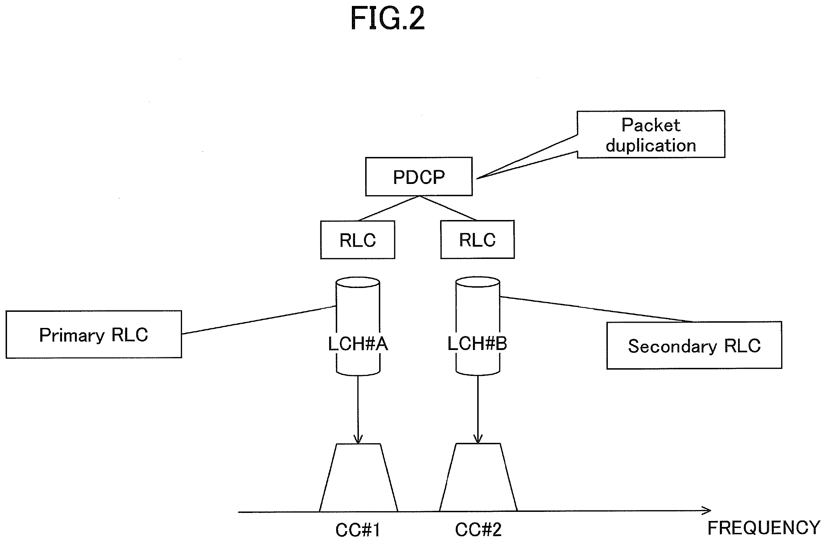

FIG. 2 is a diagram illustrating an example of operation of a radio communication system. Packet duplication is defined for high reliability communication such as URLLC that uses frequency diversity to improve reliability. In the radio communication system illustrated in FIG. 2, two CCs are set for the user equipment 20. With respect to a CC#1 and a CC#2, RLC connections are established using an LCH#A and a LCH#B, respectively. A LCH is a logical channel such as a DTCH (Dedicated Traffic Channel). The two RLC connections are associated with one PDCP (Packet Data Convergence Protocol) and send and receive identical packets duplicated in different serving cells. In FIG. 2, a primary RLC is a LCH#A RLC and a secondary RLC is a LCH#B. In the example shown in FIG. 2, the different serving cells are provided according to CA. Instead, the different serving cells may be provided according to DC. Packet duplication can be dynamically activated or deactivated based on an instruction from a base station apparatus 10. For example, an instruction from a base station apparatus 10 may be of a Media Access Control (MAC) signaling. When packet duplication will be activated, a UL PDCP PDU (Uplink PDCP Protocol data unit) is sent through the primary RLC and the secondary RLC; when packet duplication will be deactivated, a UL PDCP PDU is sent through only the primary RLC.

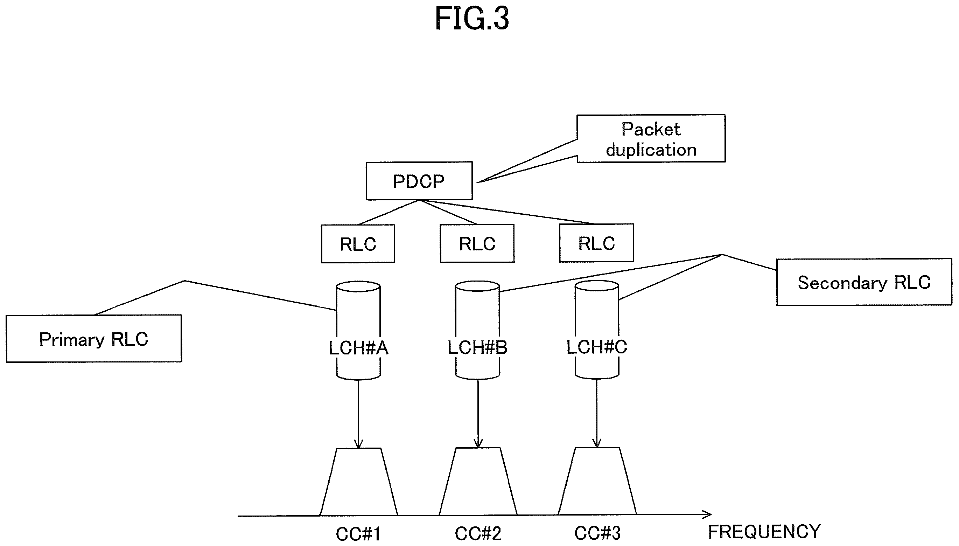

FIG. 3 is a diagram illustrating an example of operation of a radio communication system according to the embodiment of the present invention. FIG. 3 is an example of packet duplication control in which two or more secondary RLCs are set. According to the radio communication system illustrated in FIG. 3, three CCs are set for the user equipment 20. With respect to a CC#1, a CC#2, and a CC#3, RLC connections are established using a LCH#A, a LCH#B, and a LCH#C, respectively. The three RLC connections are associated with one PDCP to send and receive identical packets duplicated in different serving cells. In FIG. 3, for example, a primary RLC is a RLC corresponding to the LCH#A and secondary RLCs are a RLC corresponding to the LCH#B and a RLC corresponding to LCH#C.

In the example illustrated in FIG. 3, the different serving cells, similar to FIG. 2, are provided according to CA. Instead, the different serving cells may be provided according to DC. For example, each of three or more RLCs may be provided according to DC and each of three or more RLCs may be provided according to CA. For example, a MCG may have one primary RLC while a SCG may have two secondary RLCs. In addition, a MCG may have one primary RLC and one secondary RLC while a SCG may have one secondary RLC.

For a case where packet duplication control is applied to three or more RLC connections, it may be impossible to perform flexible control because control activation and deactivation are performed on a per DRB (Data Radio Bearer) unit basis or a per PDCP unit basis. Also, when packet duplication control is applied to three or more RLC connections, it may be impossible to determine which RLC entity has a failure when a RLC failure has occurred.

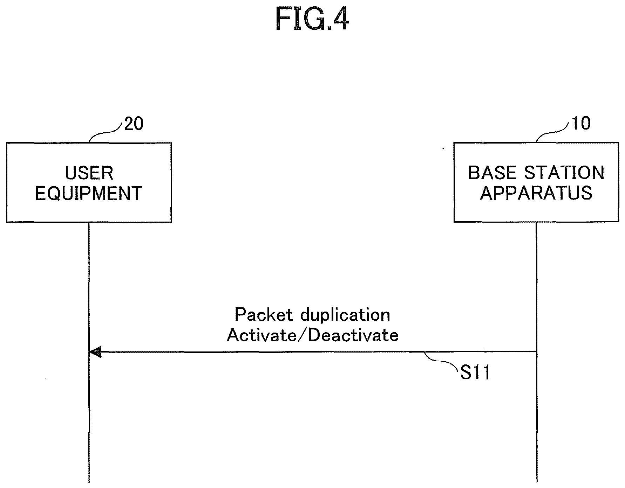

FIG. 4 is a sequence diagram illustrating an example (1) of operation of packet duplication according to an embodiment of the present invention. For a case where packet duplication control is executed on a per DRB basis or a per PDCP unit basis, it is difficult to activate or deactivate packet duplication control flexibly according to the state of each cell. For example, if two secondary RLCs are set, both are activated or deactivated, and therefore, cannot be controlled according to the load conditions of each cell. For example, for a case where a CC of a secondary RLC#1 has a light load and a CC of a secondary RLC#2 has a heavy load, and then, packet duplication is deactivated for the secondary RLC#1 accordingly, packet duplication is deactivated also for the secondary RLC#2 and thus, duplicate transmission is not possible.

Therefore, in step S11 illustrated in FIG. 4, a base station apparatus 10 may include in an instruction "Packet duplication Activate/Deactivate", i.e., for the user equipment 20 to activate or deactivate packet duplication, information indicating which LCH and RLC bearer are a target. A RLC bearer may be a RLC entity and may be a RLC channel. Information indicative of which LCH and RLC bearer are a target may be an ID of a LCH or an ID of a RLC bearer, a CC or cell identifier associated with a LCH and a RLC bearer that are a target, or the like. In addition, for a case where an instruction for packet duplication is indicated through RRC (Radio Resource Control), an initial state of activating or deactivating of packet duplication may be set for each LCH and RLC bearer. "Packet duplication Activate/Deactivate" may be MAC signaling and may be RRC signaling.

Deactivating of packet duplication may be implemented implicitly based on a timer. The more the number of LCHs and RLC bearers associated with one PDCP increases, the more MAC CEs (Control Elements) required for activating or deactivating increase, resulting in an increase in the signaling overhead. Then, in order to reduce the signaling overhead, packet duplication may be deactivated implicitly based on a timer.

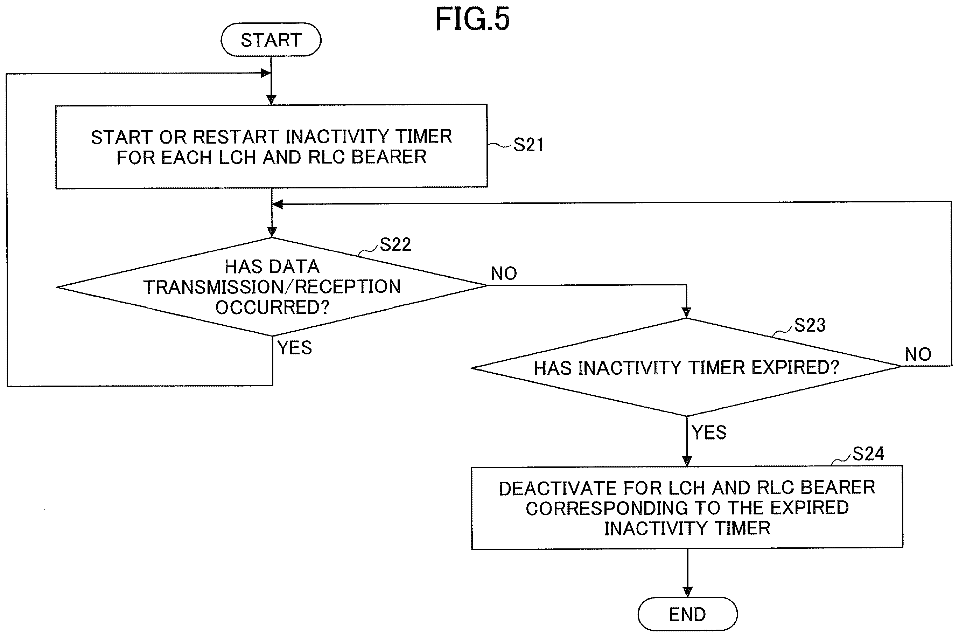

FIG. 5 is a flowchart illustrating an example (2) of operation of packet duplication according to an embodiment of the present invention. The user equipment 20 sets an Inactivity Timer for each LCH and RLC bearer and starts or restarts the Inactivity Timer each time when the user equipment 20 performs one of wireless data transmission and reception. When the Inactivity Timer expires, the user equipment 20 deactivates packet duplication for the corresponding LCH and RLC bearer.

In step S21, the user equipment 20 starts or restarts an Inactivity Timer for each LCH and RLC bearer for which packet duplication is activated. Subsequently, the user equipment 20 determines whether at least one of transmission and reception of data has occurred. That is, the user equipment 20 may determine whether only data transmission has occurred, may determine whether only data reception has occurred, and may determine whether data transmission and reception have occurred. For a case where data transmission or data reception occurs, the user equipment 20 proceeds to step S21 (YES of S22) and restarts the corresponding LCH and RLC bearer Inactivity Timer. For a case where none of data transmission and data reception occurs (NO in S22), the user equipment 20 proceeds to step S23. In step S23, the user equipment 20 determines whether the Inactivity Timer has expired. If the Inactivity Timer has expired (YES in S23), the user equipment 20 proceeds to step S24. If the Inactivity Timer has not expired (NO in S23), the user equipment 20 proceeds to step S22. In step S24, the user equipment 20 deactivates the processing of packet duplication for the LCH and RLC bearer corresponding to the expired Inactivity Timer. Concerning transmission, retransmission packets (e.g., retransmission of a PDCP layer, retransmission of a RLC layer, and retransmission of a MAC layer) need not be taken into consideration. Concerning reception, duplicate packets and unauthorized packets need not be taken into consideration.

A set time for expiration of an Inactivity Timer may be determined for each DRB and PDCP and may be determined for each LCH and RLC bearer. An Inactivity Timer may be started when packet duplication is set by RRC signaling. Alternatively, an Inactivity Timer may be started when "activation" is indicated as an initial state.

In a case of packet duplication or PDCP duplication, the load condition or the like of each LCH and RLC bearer (or an associated CC or cell) is not taken into consideration and data coming from a higher layer is duplicated. Therefore, when the load of each CC is light, the Inactivity Timer repeatedly starts or restarts. On the other hand, for a CC having a heavy load or a degraded CC, data is not transmitted or received, and thus, the Inactivity timer expires, resulting in deactivation of packet duplication of the corresponding LCH and RLC bearer.

Implicit deactivation of packet duplication may be performed based on a counter. The user equipment 20 sets an Inactivity Counter for each LCH and RLC bearer and resets the Inactivity Counter to an initial value (e.g., "0") each time when the user equipment 20 performs one of wireless data transmission and reception. In a case where a packet coming from a higher layer cannot be transmitted, the Inactivity Counter is increased. If the Activity Counter equals or exceeds a predetermined threshold, the user equipment 20 deactivates packet duplication for the corresponding LCH and RLC bearer. The "case where a packet coming from a higher layer cannot be transmitted" is, for example, a case where a packet discard timer instructs the packet to be discarded before being sent; a case where data of another LCH and RLC bearer arrives and thus the duplicate packet is no longer necessary to be transmitted; or the like. A counting method of an Inactivity Counter may be a method of counting based on, for example, the number of packets, i.e., the number of any of PDCP PDUs, PDCP SDUs (PDCP Service Data Units), SDAP PDUs (Service Data Adaptation Protocol PDUs), SDAP SDUs, and SDAP SDUs, and may be a method of counting based on the size of a packet (e.g., a predetermined number of bytes).

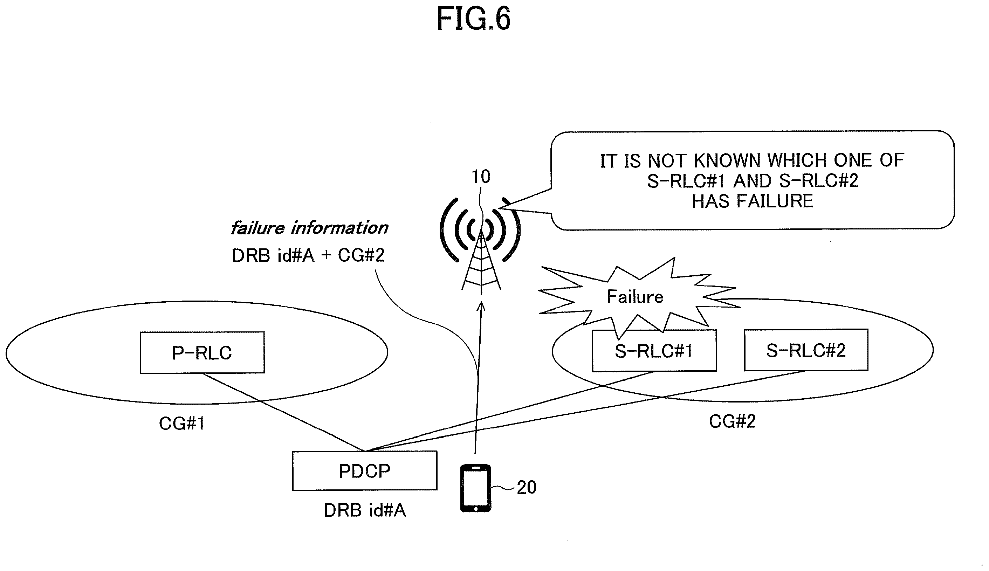

FIG. 6 is a diagram for explaining an example of a RLC failure during packet duplication. During packet duplication control, when a RLC failure (e.g., an excess of the number of times of RLC maximum retransmissions) occurs in a secondary RLC, a bearer ID and a cell group ID are reported. In FIG. 6, a P-RLC is established as a primary RLC in a CG#1; a S-RLC#1 and a S-RLC#2 are established as secondary RLCs in a CG#2. The CG#1 and the CG#2 are cell groups. As shown in FIG. 6, in the S-RLC#1, which is a secondary RLC, when a RLC failure occurs, the user equipment 20 indicates to a base station apparatus 10, as failure information, "DRBid#A", which is a bearer ID, and "CG#2", which is a cell group ID, through RRC signaling. If a plurality of secondary RLCs are set to the same cell group, it is not possible to determine, from failure information, which RLC entity has a failure. Failure information is sent with the use of a RRC message as follows. If DC is applied, file information is sent to a MN. If CA is applied, file information is sent to the node corresponding to a CG that is set. However, if a secondary RLC is set to a SN of DC and a SRB (Signaling radio bearer) is not set to the SN, failure information is once sent to a MN via a SRB of the MN and the MN sends the failure information to the SN via an interface for a transmission line.

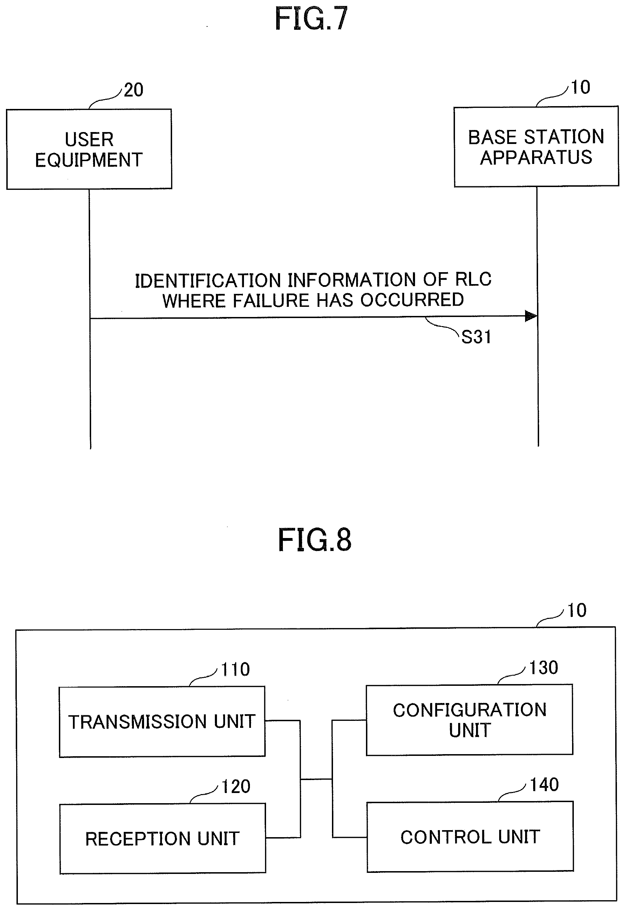

FIG. 7 is a sequence diagram illustrating an example (3) of operation of packet duplication according to an embodiment of the present invention. When a RLC failure occurs during packet duplication, the user equipment 20 includes, in failure information, information indicating which RLC has a failure and sends the information to a base station apparatus 10.

In step S31, the user equipment 20 transmits to the base station apparatus 10 failure information including identification information of a RLC in which a failure has occurred. The identity information of the RLC in which the failure has occurred may be, for example, as explicit information, an identifier of the RLC entity or a LCID (Logical channel ID). The identification information of the RLC in which the failure has occurred may be, as implicit information, for example, an identifier of a radio resource (e.g., a frequency resource or a time resource) for sending the file information, an identifier of a message for sending the file information, or an identifier of a bearer (e.g., a LCH and RLC bearer, RB-ID) for sending a message to indicate the file information.

In addition, a setting-up method for packet duplication by a base station apparatus 10 may be restricted. For example, a plurality of secondary RLCs may be prohibited from being set to the same cell group. Although flexibility of packet duplication control is thus not improved, it is possible to avoid the need for an introduction of new signaling.

In addition, a failure in one RLC need not be reported through failure information. For example, when a plurality of secondary RLCs are set, the user equipment 20 need not send a report to a base station apparatus 10 when a failure occurs in any secondary RLC, and may send a report indicating that RLC failures have occurred to a base station apparatus 10 when failures have occurred in at least two or more secondary RLCs. Although transmission according to packet duplication in a RLC entity where a failure has occurred may be thus stopped, it is possible to avoid the need for an introduction of new signaling.

The user equipment 20 may indicate to a base station apparatus 10 the following UE capabilities 1) through 3).
1) An extended packet duplication capability. The above-described packet duplication capability may be indicated on a per user equipment 20 basis; the number of LCH and RLC bearers that can be set for a RB (Radio Bearer) for which packet duplication is used may be indicated.
2) Whether the user equipment 20 has a capability of, upon packet duplication, explicit activation or deactivation on a per LCH and RLC bearer unit basis or a capability of implicit activation or deactivation on a per LCH and RLC bearer unit basis may be indicated.
3) Whether the user equipment 20 has a capability of reporting, upon packet duplication, which secondary RLC entity from among a plurality of secondary RLSs has a failure may be indicated.

According to the above-described embodiments, the user equipment 20 is capable of performing activation or deactivation on a per RLC basis in communication where packet duplication using three or more RLC connections is applied and is capable of reporting which RLC entity has a failure when the failure has occurred in the RLC used with respect to packet duplication.

Thus, the user equipment 20 is capable of appropriately controlling a communication condition in communication where packet duplication using a plurality of RLC (Radio Link Control) connections is applied.

### (Apparatus Configuration)

Next, a functional configuration example of a base station apparatus 10 and a user equipment 20 that execute the processes and operations described above will be described. A base station apparatus 10 and a user equipment 20 include the functions of implementing the embodiments described above. However, each of a base station apparatus 10 and a user equipment 20 may include only some of the functions of the embodiments.

### <Base Station Apparatus 10>

FIG. 8 is a diagram illustrating an example of a functional configuration of a base station apparatus 10. As shown in FIG. 8, a base station apparatus 10 includes a transmission unit 110, a reception unit 120, a configuration unit 130, and a control unit 140. The functional configuration shown in FIG. 8 is only one example. As long as the operations according to the embodiments of the present invention can be implemented, the function classification and the names of the functional units may be any function classification and names.

The transmission unit 110 includes a function of generating a signal to be transmitted to the user equipment 20 and transmitting the signal wirelessly. The reception unit 120 includes a function of receiving various signals transmitted from the user equipment 20 and acquiring information of a higher layer from a received signal, for example. The transmission unit 110 has a function of transmitting a NR-PSS, a NR-SS, a NR-PBCH, a DL/UL control signal, a DL reference signal, etc. to the user equipment 20.

The configuration unit 130 stores preset setting information and various setting information to be transmitted to the user equipment 20 in a storage device and reads out the setting information from the storage device as needed. The contents of the setting information are, for example, information concerning setting communication where packet duplication is applied.

The control unit 140 performs a process concerning settings for the user equipment 20 to perform communication where packet duplication is applied, as described above for the embodiments. The control unit 140 transmits scheduling of communication where packet duplication is applied to the user equipment 20 through the transmission unit 110. A functional unit for transmitting signals in the control unit 140 may be included in the transmission unit 110 and a functional unit for receiving signals in the control unit 140 may be included in the reception unit 120.

### <User equipment 20>

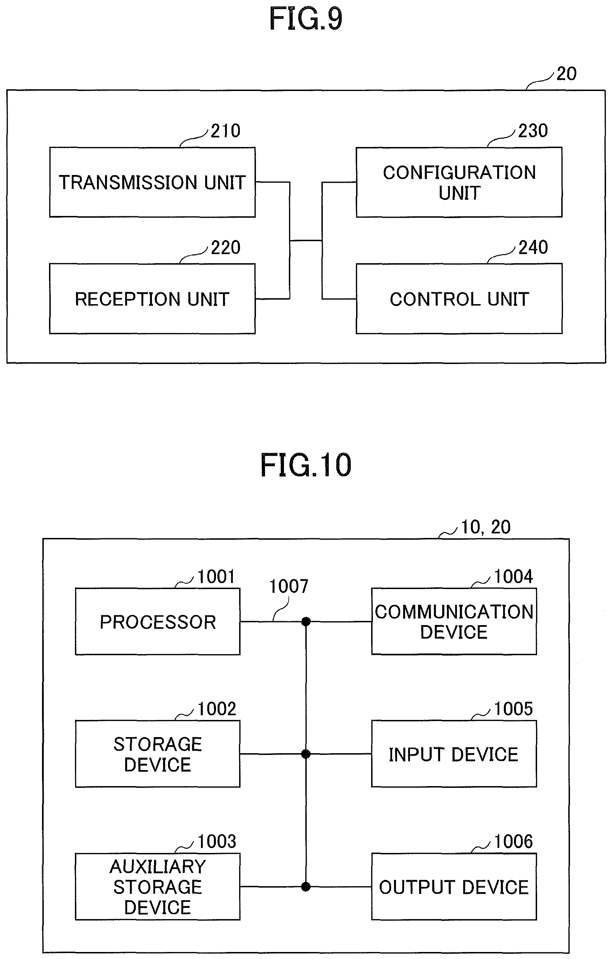

FIG. 9 is a diagram illustrating an example of a functional configuration of a user equipment 20. As shown in FIG. 9, the user equipment 20 includes a transmission unit 210, a reception unit 220, a configuration unit 230, and a control unit 240. The functional configuration shown in FIG. 9 is only one example. As long as the operations according to the embodiments of the present invention can be implemented, the function classification and the names of the functional units may be any function classification and names.

The transmission unit 210 generates a transmission signal from transmission data and transmits the transmission signal wirelessly. The reception unit 220 receives a variety of signals wirelessly and acquires a higher layer signal from a received physical layer signal. The reception unit 220 has a function to receive a NR-PSS, a NR-SS, a NR-PBCH, a DL/UL/SL control signal, a reference signal, etc. transmitted from a base station apparatus 10.

The configuration unit 230 stores various setting information received from a base station apparatus 10 or a user equipment 20 through the reception unit 220 in the storage device and reads out the setting information from the storage device as needed. The configuration unit 230 also stores preset setting information. The contents of the setting information are, for example, information concerning a setting of communication where packet duplication is applied.

The control unit 240 controls communication where packet duplication is applied, as described above for the embodiments. The control unit 240 also controls monitoring for detecting data inactivation in communication where packet duplication is applied. A functional unit for transmitting signals in the control unit 240 may be included in the transmission unit 210 and a functional unit for receiving signals in the control unit 240 may be included in the reception unit 220.

### (Hardware Configuration)

The block diagrams (FIGs. 8 and 9) used for explaining the above-mentioned embodiments illustrate blocks in function units. These functional blocks (configuration units) are implemented by any combinations of at least one of hardware and software. In this regard, a method for implementing the various functional blocks are not particularly limited. That is, each functional block may be implemented by one device that is a physical or logical combination. In addition, each functional block may be implemented by two or more devices that are physically or logically separated and directly or indirectly (for example, in a wired or wireless manner) connected together. The functional block may be implemented from combining the above-mentioned one device or the above-mentioned plurality of devices with software.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, etc. For example, a functional block (element) that has a function of transmitting is called a transmission unit or a transmitter. As described above, a method for implementing these functions are not particularly limited.

For example, a base station apparatus 10, a user equipment 20, etc. according to an embodiment of the present disclosure may function as computers that perform processes of the radio communication schemes according to the present disclosure. FIG. 10 is block diagram illustrating one example of hardware configurations of a base station apparatus 10 and a user equipment 20 according to an embodiment of the present disclosure. Each of the above-described base station apparatus 10 and user equipment 20 may be configured as a computer apparatus that physically includes a processor 1001, a storage device 1002, an auxiliary storage device 1003, a communication device 1004, an input device 1005, an output device 1006, a bus 1007, etc.

Note that, below, the term "device" may be replaced with a circuit, a unit, or the like. The hardware configuration of each of a base station apparatus 10 and a user equipment 20 may include one or a plurality of the devices illustrated, and may be configured not to include some of the devices illustrated.

Each of the functions of a base station apparatus 10 and a user equipment 20 is implemented as a result of hardware such as the processor 1001 and the storage device 1002 reading predetermined software (program) and thereby the processor 1001 performing operations to control communication by the communication device 1004 and control at least one of reading data from and writing data to the storage device 1002 and the auxiliary storage device 1003.

The processor 1001 controls the entirety of the computer by causing an operating system to operate, for example. The processor 1001 may include a central processing unit (CPU) that includes an interface for a peripheral device, a control device, an arithmetic device, a register, etc. For example, the above-described control unit 140, control unit 240, etc. may be implemented by processors 1001.

The processor 1001 reads a program (program codes), a software module, or data from at least one of the auxiliary storage device 1003 and the communication device 1004 onto the storage device 1002, and thus implements various processes according to the read information. As the program, a program that causes the computer to perform at least some of the operations described above for the above-described embodiments is used. For example, the control unit 140 of a base station apparatus 10 illustrated in FIG. 8 may be implemented by a control program that is stored in the storage device 1002 and operates with the processor 1001. For example, the control unit 240 of the user equipment 20 illustrated in FIG. 9 may be implemented by a control program that is stored in the storage device 1002 and operates with the processor 1001. In this regard, it has been described that the various processes described above are implemented by the single processor 1001. However, the various processes may be implemented by two or more processors 1001 simultaneously or sequentially. The processor 1001 may be implemented by one or a plurality of chips. Note that the program may be transmitted from a network through an electric communication line.

The storage device 1002 is a computer readable recording medium and may include, for example, at least one of a ROM (Read-Only Memory), an EPROM (Erasable Programmable ROM), an EEPROM (Electrically Erasable Programmable ROM), a RAM (Random Access Memory), etc. The storage device 1002 may be called a register, a cache, a main memory (a main storage), or the like. The storage device 1002 can store a program (program codes), a software module, or the like executable for implementing the communication schemes according to an embodiment of the present disclosure.

The auxiliary storage device 1003 is a computer readable recording medium and may include, for example, at least one of an optical disc such as a CD-ROM (Compact Disc ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, a magnetic strip, etc. The auxiliary storage device 1003 may be called an auxiliary storage device. The above-described recording medium may be, for example, a suitable medium such as a database, a server, or the like that includes at least one of the storage device 1002 and the auxiliary storage device 1003.

The communication device 1004 is hardware (a transmission and reception device) for performing communication between computers through at least one of a wired and wireless networks and may also be called, for example, a network device, a network controller, a network card, a communication module, or the like. The communication device 1004 may include, for example, a high frequency switch, a duplexer, a filter, a frequency synthesizer, or the like to implement at least one of a frequency division duplex (FDD) and a time division duplex (TDD). For example, a transmitting and receiving antenna, an amplifier, a transmitting and receiving unit, a transmission line interface, etc. may be implemented by the communication device 1004. The transmitting and receiving unit may be implemented in such a manner that a transmission unit and a reception unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, a LED light, or the like) that performs outputting to the outside. The input device 1005 and the output device 1006 may have an integrated configuration (for example, a touch panel).

Various devices such as the processor 1001 and the storage device 1002 are connected together via the bus 1007 for performing communication of information. The bus 1007 may be configured by a single bus and may include different buses corresponding to the devices.

Each of a base station apparatus 10 and a user equipment 20 may include hardware such as a microprocessor, a digital signal processor (DSP), an ASIC (Application Specific Integrated Circuit), a PLD (Programmable Logic Device), or a FPGA (Field Programmable Gate Array). The hardware may implement some or all of the various functional blocks. For example, the processor 1001 may be implemented by at least one of these types of hardware.

### (Summary of Embodiments)

As described above, according to an embodiment of the present invention, a user equipment is provided including a reception unit configured to receive an instruction for packet duplication from a base station apparatus; a control unit configured to determine based on the instruction for packet duplication a primary RLC (Radio Link Control) and a plurality of secondary RLCs to be used with respect to packet duplication; and a communication unit configured to apply packet duplication to all or a part of the determined primary RLC and plurality of secondary RLCs and perform communication.

The above-mentioned configuration enables determination of RLCs to be used with respect to packet duplication in communication where packet duplication using three or more RLC connections is applied. That is, it is possible to appropriately control a communication condition of communication where packet duplication using a plurality of RLC (Radio Link Control) connections is applied.

The control unit may determine, based on the instruction for packet duplication, a secondary RLC of the plurality of secondary RLCs for which packet duplication is to be activated or deactivated. This configuration enables the user equipment 20 to implement activation or deactivation on a per RLC basis in communications where packet duplication using three or more RLC connections is applied.

The control unit may deactivate packet duplication for the primary RLC and the plurality of secondary RLCs for a case where none of data transmission and data reception occurs for a predetermined period. This configuration enables the user equipment 20 to deactivate packet duplication on a per RLC basis using an Inactivity Timer to reduce signaling in communication where packet duplication using three or more RLC connections is applied.

Further a transmission unit may be provided to transmit to the base station apparatus information indicating which RLC from among the plurality of secondary RLCs has a failure. The configuration enables the user equipment 20 to report which RLC entity has a failure when a failure has occurred in the RLC used with respect to packet duplication in communication where packet duplication using three or more RLC connections is applied.

Further a transmission unit may be provided to indicate a RLC failure to the base station apparatus when at least two or more RLCs have failures. With this configuration, the user equipment 20 can reduce signaling, by reporting a RLC failure only when a plurality of secondary RLCs have failures in communication where packet duplication using three or more RLC connections is applied.

Further, according to an embodiment of the present invention, a base station apparatus is provided including a transmission unit configured to transmit an instruction for packet duplication to a user equipment; and a communication unit configured to apply packet duplication to a primary RLC (Radio Link Control) and a plurality of secondary RLCs based on the instruction for packet duplication and perform communication. The instruction for packet duplication includes information indicating the primary RLC and the plurality of secondary RLCs to be used with respect to packet duplication.

The above-mentioned configuration enables determination of RLCs to be used with respect to packet duplication in communication where packet duplication using three or more RLC connections is applied. That is, it is possible to appropriately control a communication condition of communication where packet duplication using a plurality of RLC (Radio Link Control) connections is applied.

### (Supplement to Embodiments)

Thus, the embodiments of the present invention have been described. However, the disclosed invention is not limited to such embodiments, and the person skilled in the art will understand various variants, modifications, alternatives, replacements, etc. Although the specific numerical values have been used as examples for promoting understanding of the invention, the numerical values are merely examples unless otherwise noted, and any other suitable values may be used instead. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above for the embodiments, the orders of steps may be changed unless a contradiction arises. For the sake of convenience for describing the processing, a base station apparatus 10 and a user equipment 20 have been described with the use of the functional block diagrams. These apparatuses may be implemented by hardware, software, or a combination thereof. Each of software functioning with a processor of a base station apparatus 10 according to the embodiments of the present invention and software functioning with a processor of the user equipment 20 according to the embodiments of the present invention may be stored in any suitable recording medium such as a random access memory (RAM), a flash memory, a read-only memory (ROM), an EPROM, an EEPROM, a register, a hard disk (HDD), a removable disk, a CD-ROM, a database, or a server.

Sending information may be implemented not only according to the present disclosure but also according to another method. For example, sending information may be implemented with the use of physical layer signaling (for example, DCI (Downlink Control Information) or UCI (Uplink Control Information)), higher layer signaling (for example, RRC (Radio Resource Control) signaling, MAC (Medium Access Control) signaling, broadcast information (a MIB (Master Information Block), or a SIB (System Information Block)), or another signal, or a combination thereof. RRC signaling may be called a RRC message, and, for example, may be a RRC Connection Setup message, a RRC Connection Reconfiguration message, or the like.

Each embodiment described herein may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark); and a next-generation system expanded on the basis thereof. Also a plurality of systems may be combined and applied (e.g., a combination of at least one of LTE and LTE-A with 5G, etc.).

Concerning the operation procedures, sequences, flowcharts, etc. according to each embodiment described herein, the orders of steps may be changed unless a contradiction arises. For example, concerning the methods described herein, the various step elements are illustrated in the orders of examples and the methods are not limited to the illustrated specific orders.

The specific operations performed by a base station apparatus 10 described herein may in some cases be performed by an upper node. It is clear that the various operations performed for communication with the user equipment 20 can be performed by at least one of a base station apparatus 10 and another network node (for example, a MME, a S-GW or the like may be cited, but not limited thereto) in a network that includes one or a plurality of network nodes including the base station apparatus 10. In the above, the description has been made for the case where the another network node other than the base station apparatus 10 is a single node as an example. In this regard, the another network node may be a combination of a plurality of other network nodes (for example, a MME and a S-GW) .

Information, signals, etc. described herein may be output from a higher layer (or a lower layer) to a lower layer (or a higher layer); information, signals, etc. described herein may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

Determination may be made with the use of a value expressed by one bit (0 or 1), may be made with the use of a truth value (Boolean: true or false), and may be made through a comparison of numerical values (for example, a comparison with a predetermined value).

Regardless of whether software is called software, firmware, middleware, microcode, a hardware description language, or another name, software should be interpreted broadly to mean instructions, instruction sets, codes, code segments, program codes, a program, a subprogram, a software module, an application, a software application, a software package, a routine, a subroutine, an object, an executable file, an execution thread, a procedure, a function, etc.

Software, instructions, information, etc. may be transmitted and received through transmission media. For example, in a case where software is transmitted from a website, a server or another remote source through at least one of a wired technology (such as a coaxial cable, an optical-fiber cable, a twisted pair, or a digital subscriber line (DSL)) and a radio technology (such as infrared or microwaves), at least one of the wired technology and the radio technology is included in the definition of a transmission medium.

Information, signals, etc. described herein may be expressed with the use of any one of various technologies. For example, data, instructions, commands, information, signals, bits, symbols, chips, etc. mentioned herein may be expressed by voltages, currents, electromagnetic waves, magnetic fields or magnetic particles, optical fields or photons, or any combinations thereof.

The terms described herein and the terms necessary for understanding the specification may be replaced with terms having the same or similar meanings. For example, at least one of a channel and a symbol may be a signal (signaling). A signal may be a message. A component carrier (CC) may be called a carrier frequency, a cell, a frequency carrier, or the like.

The terms "system" and "network" used herein are used interchangeably.

Information, parameters, etc. described herein may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed herein. Various channels (for example, a PUCCH, a PDCCH, etc.) and information elements can be identified by any suitable names, and therefore, various names given to these various channels and information elements are not restrictive in any respect.

In the present disclosure, terms such as "base station", "radio base station", "base station apparatus", "fixed station", "NodeB", "eNodeB (eNB)", "gNodeB (gNB)", "access point", "transmission point", "reception point", "transmission/reception point", "cell", "sector", "cell", "cell group", "carrier", and "component carrier" may be used interchangeably. A base station may be called a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provide(s) communication services in the coverage.

In the present disclosure, terms such as "mobile station (MS)", "user terminal", "user equipment (UE)", and "terminal" may be used interchangeably.

By the person skilled in the art, a mobile station may be called any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be called a transmitting apparatus, a receiving apparatus, a communication apparatus, or the like. At least one of a base station and a mobile station may be an apparatus mounted on a mobile body, a mobile body itself, or the like. A mobile body may be a transporting device (e.g., a vehicle, an airplane, etc.), an unmanned mobile (e.g., a drone, an automated vehicle, etc.), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station in the present disclosure may be replaced with a user terminal. For example, each embodiment of the present disclosure may be applied to a configuration in which communication between a base station and a user terminal is replaced by communication between a plurality of units of the user equipment 20 (that may be called D2D (Device-to-Device), V2X (Vehicle-to-Everything), or the like). In this case, the user equipment 20 may have above-described functions of a base station apparatus 10. In this regard, a word such as "up" or "down" may be replaced with a word corresponding to communication between terminals (for example, "side"). For example, an up channel, a down channel, or the like may be replaced with a side channel.

Similarly, a user terminal in the present disclosure may be replaced with a base station. In this case, a base station may have above-described functions of a user terminal.

The term "to determine" used herein may mean various operations. For example, "to determine" may mean to consider having "determined" to have performed calculating, computing, processing, deriving, investigating, looking up, searching, inquiring (for example, looking up a table, a database, or another data structure), ascertaining, or the like. Also, "to determine" may mean to consider having "determined" to have performed receiving (for example, receiving information), transmitting (for example, transmitting information), inputting, outputting, or accessing (for example, accessing data in a memory), or the like. Also, "to determine" may mean to consider having "determined" to have performed resolving, selecting, choosing, establishing, comparing, or the like. That is, "to determine" may mean to consider having "determined" a certain operation. "To determine" may be replaced with "to assume", "to expect", "to consider", or the like.

Each of the terms "connected" and "coupled" and any variations thereof means any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be replaced with "accessing". In a case where the terms "connected" and "coupled" and any variations thereof are used herein, it may be consider that two elements are "connected" or "coupled" together with the use of at least one type of a medium from among one or a plurality of wires, cables, and print electric connections, and in addition, as some non-limiting and non-inclusive examples, it may be consider that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as a RS (Reference Signal); a reference signal may be called a pilot depending on an applied standard.

Words "based on" or "on the basis of" used herein do not mean "based on only" or "on the basis of only" unless otherwise specified. That is, the words "based on" or "on the basis of" mean both "based on only" and "based on at least" or both "on the basis of only" and "on the basis of at least".

Any references to elements using designations such as "first" or "second" used herein do not generally limit the amount or the order of these elements. These designations can be used herein as a convenient method to distinguish one or a plurality of elements. Therefore, references to first and second elements do not mean that only the two elements can be used there or that the first element should be, in some way, prior to the second element.

"Means" in each of the above-mentioned apparatuses may be replaced by "unit", "circuit", "device", or the like.

In a case where any one of "including" and variations thereof is used herein or used in the claims, each of these terms has an intended meaning of inclusiveness in the same way as the term "comprising". Further, the term "or" used herein or used in the claims has an intended meaning of not exclusive-or.

A radio frame may include, with respect to the time domain, one or a plurality of frames. Each of one or a plurality of frames with respect to the time domain may be called subframe. A subframe may include, with respect to the time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering process performed by a transceiver with respect to the frequency domain, a specific windowing process performed by a transceiver with respect to the time domain, etc.

A slot may include, with respect to the time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols with respect to the time domain. A minislot may also be called a subslot. A minislot may include fewer symbols than a slot. A PDSCH (or PUSCH) transmitted at a time unit greater than a minislot may be called a PDSCH (or PUSCH) mapping type A. A PDSCH (or PUSCH) transmitted using minislots may be called a PDSCH (or PUSCH) mapping type B.

Each of a radio frame, a subframe, a slot, a minislot, and a symbol means a unit for transmitting a signal. Each of a radio frame, a subframe, a slot, a minislot, and a symbol may be called a corresponding other name.

For example, one subframe may be called a transmission time interval (TTI); a plurality of consecutive subframes may be called a TTI; one slot or one minislot may be called a TTI. That is, at least one of a subframe and a TTI may be a subframe (1 ms) according to the existing LTE; may have a period shorter than 1 ms (e.g., 1-13 symbols); and may have a period longer than 1 ms. Instead of subframes, units expressing a TTI may be slots, minislots, or the like.

A TTI means, for example, a minimum time unit of scheduling with respect to radio communication. For example, in a LTE system, a base station performs scheduling on each user equipment 20 to allocate, in TTI units, radio resources (such as frequency bandwidths, transmission power, etc. available to each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is called a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may called an ordinary TTI (a TTI according to LTE Rel.8-12), a normal TTI, a long TTI, an ordinary subframe, a normal subframe, a long subframe, a slot, or the like. A TTI shorter than an ordinary TTI may be called a shortened TTI, a short TTI, a partial or fractional TTI, a shortened subframe, a short subframe, a minislot, a subslot, a slot, or the like.

A long TTI (e.g., an ordinary TTI, a subframe, or the like) may be replaced with a TTI having a long time exceeding 1 ms; a short TTI (e.g., a shortened TTI, or the like) may be replaced with a TTI having a TTI length less than the TTI length of a long TTI and greater than or equal to 1 ms.

A resource block (RB) is a resource allocation unit with respect to the time domain and the frequency domain and may include one or a plurality of consecutive subcarriers with respect to the frequency domain. The number of subcarriers included in a RB may be the same regardless of Numerology, and, for example, may be 12. The number of subcarriers included in a RB may be determined based on Numerology.

With respect to the time domain, a RB may include one or a plurality of symbols, and may have a length of 1 minislot, 1 subframe, or 1 TTI. Each of 1 TTI, 1 subframe, etc. may include one or a plurality of resource blocks.

One or a plurality of RBs may be called physical resource blocks (PRBs: Physical RBs), a subcarrier group (SCG: Sub-Carrier Group), a resource element group (REG: Resource Element Group), a PRB pair, a RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in a carrier. A common RB may be identified by a RB index with respect to a common reference point in the carrier. PRBs may be defined by a BWP and may be numbered in the BWP.

A BWP may be a BWP (UL BWP) for UL and may be a BWP (DL BWP) for DL. For a UE, one or a plurality of BWPs may be set in 1 carrier.

At least one of BWPs that have been set may be active, and a UE need not assume sending or receiving a predetermined signal/channel outside the active BWP. A "cell", a "carrier" or the like herein may be replaced with a "BWP".

The above-described structures of radio frames, subframes, slots, minislots, symbols, etc. are merely examples; the number of subframes included in a radio frame, the number of slots included in a subframe or a radio frame, the number of minislots included in a slot, the number of symbols and the number of RBs included in a slot or a minislot, the number of subcarriers included in a RB, the number of symbols included in a TTI, a symbol length, a cyclic prefix (CP) length, etc. can be variously changed.

Throughout the present disclosure, in a case where an article such as a, an, or the in English is added through a translation, the present disclosure may include a case where a noun following the article is of a plural forms.

Throughout the present disclosure, the term "A and B are different" may mean "A and B are different from each other". This term may mean that "A and B are different from C, respectively". Terms such as "separate" and "coupled" may also be interpreted in the same way as "different."

Each embodiment described herein may be solely used, may be used in combination with another embodiment, and may be used in a manner of being switched with another embodiment upon implementation. Indication of predetermined information (for example, indication of "being x") may be implemented not only explicitly but also implicitly (for example, by not indicating predetermined information).

In the disclosure, the transmission unit 210 and the reception unit 220 are examples of a communication unit. The transmission unit 110 and the reception unit 120 are examples of a communication unit.

The present disclosure has been described in detail. In this regard, it is apparent to those skilled in the art that the disclosure is not limited to the embodiments described herein. The disclosure may be implemented as modifications and changes without departing from the scope of the present disclosure as defined in the claims. Accordingly, the description of the present disclosure is intended for illustrative purposes and does not limit the disclosure in any way.

### Description of Reference Signs

10 base station apparatus
110 transmission unit
120 reception unit
130 configuration unit
140 control unit
20 user equipment
210 transmission unit
220 reception unit
230 configuration unit
240 control unit
1001 processor
1002 storage device
1003 auxiliary storage device
1004 communication device
1005 input device
1006 output device

## Claims

1. A terminal (20) comprising:
a reception unit (220) configured to receive an instruction for packet duplication for a plurality of secondary Radio Link Control, RLC, entities, the instruction being a Media Access Control, MAC, signaling, from a base station;
a controller (240) configured to determine, based on the instruction, a secondary RLC of the plurality of secondary RLC entities, for which packet duplication is to be activated or deactivated; and
a transmission unit (210) configured to perform, upon determining that the packet duplication is activated, communication using the packet duplication for the secondary RLC entity;
**characterized in that**
the transmission unit (210) is configured to transmit, to the base station (10), failure information indicating, among the plurality of secondary RLC entities for which the packet duplication is activated, one or more failing RLC entities in which a failure has occurred.

2. The terminal (20) according to claim 1, wherein the instruction for the packet duplication is an instruction in each of RLC entities.

3. The terminal (20) according to claim 1, wherein
the reception unit (220) is configured to receive the instruction for the packet duplication using a MAC protocol, and
the reception unit (220) is configured to transmit the failure information using a Radio Resource Control, RRC, protocol.

4. A base station (10) comprising:
a controller (140) configured to determine whether packet duplication for a plurality of secondary Radio Link Control, RLC, entities is activated; and
a transmission unit (110) configured to transmit, upon determining that the packet duplication is activated, an instruction for the packet duplication for a plurality of secondary Radio Link Control, RLC, entities, the instruction being MAC signaling, to a terminal (20), wherein the instruction causes the terminal (20) to activate the packet duplication for a secondary RLC entity of the plurality of secondary RLC entities,
wherein the transmission unit (110) is configured to communicate with the terminal (20) using the packet duplication for the secondary RLC entity; **characterized in that**
the base station (10) further comprising a reception unit (220) configured to receive failure information indicating, among the plurality of secondary RLC entities for which the packet duplication is activated, one or more failing RLC entities in which a failure has occurred.

5. A communication system comprising:
a terminal (20) according to any one of claims 1 to 3, and
a base station (10) according to claim 4.

6. A communication method comprising:
receiving, with a terminal (20), an instruction for packet duplication for a plurality of secondary Radio Link Control, RLC, entities, the instruction being MAC signaling, from a base station (10);
based on the instruction, determining, with the terminal (20), a secondary RLC of the plurality of secondary RLC entities, for which packet duplication is to be activated or deactivated;
upon determining that the packet duplication is activated, performing, by the terminal (20), communication using the packet duplication for the secondary RLC entity; **characterized in that** the method further comprises:
transmitting, to the base station (10), failure information indicating, among the plurality of secondary RLC entities for which the packet duplication is activated, one or more failing RLC entities in which a failure has occurred.

## Patentansprüche

1. Endgerät (20), umfassend:
eine Empfangseinheit (220), die dazu ausgebildet ist, eine Anweisung für eine Paketduplizierung für eine Vielzahl von sekundären Funkverbindungssteuerungs-, RLC-, Entitäten zu empfangen, wobei die Anweisung eine Media-Access-Control-, MAC-, Signalisierung von einer Basisstation ist;
eine Steuereinheit (240), die dazu ausgebildet ist, basierend auf der Anweisung eine sekundäre RLC der Vielzahl von sekundären RLC-Entitäten, zu bestimmen, für die eine Paketduplizierung aktiviert oder deaktiviert werden soll; und
eine Übertragungseinheit (210), die dazu ausgebildet ist, bei der Bestimmung, dass die Paketduplizierung aktiviert ist, eine Kommunikation unter Verwendung der Paketduplizierung für die sekundäre RLC-Entität durchzuführen;
**dadurch gekennzeichnet, dass**
die Übertragungseinheit (210) dazu ausgebildet ist, an die Basisstation (10) Fehlerinformationen zu übertragen, die unter der Vielzahl von sekundären RLC-Entitäten, für die die Paketduplizierung aktiviert ist, eine oder mehrere fehlerhafte RLC-Entitäten angibt, in denen ein Fehler aufgetreten ist.

2. Endgerät (20) nach Anspruch 1, wobei die Anweisung für die Paketduplizierung eine Anweisung in jeder der RLC-Entitäten ist.

3. Endgerät (20) nach Anspruch 1, wobei
die Empfangseinheit (220) dazu ausgebildet ist, die Anweisung für die Paketduplizierung unter Verwendung eines MAC-Protokolls zu empfangen, und
die Empfangseinheit (220) dazu ausgebildet ist, die Fehlerinformationen unter Verwendung eines Funkressourcensteuerungs-, RRC-, Protokolls zu übertragen.

4. Basisstation (10), umfassend:
eine Steuereinheit (140), die dazu ausgebildet ist, zu bestimmen, ob eine Paketduplizierung für eine Vielzahl von sekundären Funkverbindungssteuerungs-, RLC-, Entitäten aktiviert ist; und
eine Übertragungseinheit (110), die dazu ausgebildet ist, bei der Bestimmung, dass die Paketduplizierung aktiviert ist, eine Anweisung für die Paketduplizierung für eine Vielzahl von sekundären Funkverbindungssteuerungs-, RLC-, Entitäten an ein Endgerät (20) zu übertragen, wobei die Anweisung eine MAC-Signalisierung ist, wobei die Anweisung das Endgerät (20) veranlasst, die Paketduplizierung für eine sekundäre RLC-Entität der Vielzahl von sekundären RLC-Entitäten zu aktivieren,
wobei die Übertragungseinheit (110) dazu ausgebildet ist, mit dem Endgerät (20) unter Verwendung der Paketduplizierung für die sekundäre RLC-Entität zu kommunizieren; **dadurch gekennzeichnet, dass**
die Basisstation (10) weiter eine Empfangseinheit (220) umfasst, die dazu ausgebildet ist, Fehlerinformationen zu empfangen, die unter der Vielzahl von sekundären RLC-Entitäten, für die die Paketduplizierung aktiviert ist, eine oder mehrere fehlerhafte RLC-Entitäten angibt, in denen ein Fehler aufgetreten ist.

5. Kommunikationssystem, umfassend:
ein Endgerät (20) nach einem der Ansprüche 1 bis 3, und
eine Basisstation (10) nach Anspruch 4.

6. Kommunikationsverfahren, umfassend:
Empfangen, mit einem Endgerät (20), einer Anweisung für eine Paketduplizierung für eine Vielzahl von sekundären Funkverbindungssteuerungs-, RLC-, Entitäten, wobei die Anweisung eine MAC-Signalisierung von einer Basisstation (10) ist;
basierend auf der Anweisung, Bestimmen, mit dem Endgerät (20), eine sekundäre RLC der Vielzahl von sekundären RLC-Entitäten, für die eine Paketduplizierung aktiviert oder deaktiviert werden soll;
bei der Bestimmung, dass die Paketduplizierung aktiviert ist, Durchführen, durch das Endgerät (20), einer Kommunikation unter Verwendung der Paketduplizierung für die sekundäre RLC-Entität; **dadurch gekennzeichnet, dass** das Verfahren weiter Folgendes umfasst:
Übertragen, an die Basisstation (10), von Fehlerinformationen, die unter der Vielzahl von sekundären RLC-Entitäten, für die die Paketduplizierung aktiviert ist, eine oder mehrere fehlerhafte RLC-Entitäten angibt, in denen ein Fehler aufgetreten ist.

## Revendications

1. Terminal (20) comprenant :
une unité de réception (220) configurée pour recevoir une instruction pour la duplication de paquets pour une pluralité d'entités Radio Link Control secondaires, RLC, l'instruction étant une signalisation de commande d'accès au support, MAC, provenant d'une station de base ;
une unité de commande (240) configurée pour déterminer, sur la base de l'instruction, une entité RLC secondaire de la pluralité d'entités RLC secondaires, pour laquelle la duplication de paquets doit être activée ou désactivée ; et
une unité de transmission (210) configurée pour effectuer, lorsqu'il est déterminé que la duplication de paquets est activée, une communication en utilisant la duplication de paquets pour l'entité RLC secondaire ;
**caractérisé en ce que**
l'unité de transmission (210) est configurée pour transmettre, à la station de base (10), des informations d'échec indiquant, parmi la pluralité d'entités RLC secondaires pour lesquelles la duplication de paquets est activée, une ou plusieurs entités RLC défaillantes dans lesquelles une défaillance s'est produite.

2. Terminal (20) selon la revendication 1, dans lequel l'instruction pour la duplication de paquets est une instruction dans chacune des entités RLC.

3. Terminal (20) selon la revendication 1, dans lequel
l'unité de réception (220) est configurée pour recevoir l'instruction pour la duplication de paquets en utilisant un protocole MAC, et
l'unité de réception (220) est configurée pour transmettre les informations d'échec en utilisant un protocole de commande des ressources radio, RRC.

4. Station de base (10) comprenant :
une unité de commande (140) configurée pour déterminer si la duplication de paquets pour une pluralité d'entités RLC secondaires est activée ; et
une unité de transmission (110) configurée pour transmettre, lorsqu'il est déterminé que la duplication de paquets est activée, une instruction pour la duplication de paquets pour une pluralité d'entités RLC secondaires, l'instruction étant une signalisation MAC, à un terminal (20), dans laquelle l'instruction amène le terminal (20) à activer la duplication de paquets pour une entité RLC secondaire de la pluralité d'entités RLC secondaires,
dans laquelle l'unité de transmission (110) est configurée pour communiquer avec le terminal (20) en utilisant la duplication de paquets pour l'entité RLC secondaire ; **caractérisée en ce que**
la station de base (10) comprenant en outre une unité de réception (220) configurée pour recevoir des informations d'échec indiquant, parmi la pluralité d'entités RLC secondaires pour lesquelles la duplication de paquets est activée, une ou plusieurs entités RLC défaillantes dans lesquelles une défaillance s'est produite.

5. Système de communication comprenant :
un terminal (20) selon l'une quelconque des revendications 1 à 3, et
une station de base (10) selon la revendication 4.

6. Procédé de communication comprenant les étapes consistant à :
recevoir, avec un terminal (20), une instruction pour la duplication de paquets pour une pluralité d'entités RLC secondaires, l'instruction étant une signalisation MAC, provenant d'une station de base (10) ;
sur la base de l'instruction, déterminer, avec le terminal (20), une entité RLC secondaire de la pluralité d'entités RLC secondaires, pour laquelle la duplication de paquets doit être activée ou désactivée ;
lorsqu'il est déterminé que la duplication de paquets est activée, effectuer, par le terminal (20), une communication en utilisant la duplication de paquets pour l'entité RLC secondaire ; **caractérisé en ce que** le procédé comprend en outre :
le fait de transmettre, à la station de base (10), des informations d'échec indiquant, parmi la pluralité d'entités RLC secondaires pour lesquelles la duplication de paquets est activée, une ou plusieurs entités RLC défaillantes dans lesquelles une défaillance s'est produite.
